# EUROPÄISCHE PATENTSCHRIFT

(11) **EP 2 714 461 B1**
(45) Veröffentlichungstag und Bekanntmachung des Hinweises auf die Patenterteilung: **08.07.2015**
(21) Anmeldenummer: 12723616.4
(22) Anmeldetag: 23.05.2012
(51) Int. Cl.: B60N 2/06, B60N 2/14, B60N 2/02

(54) **FAHRZEUGSITZ**
VEHICLE SEAT
SIÈGE DE VÉHICULE

(30) Priorität: 01.06.2011 DE 102011103225
(43) Veröffentlichungstag der Anmeldung: 09.04.2014
(73) Patentinhaber: Johnson Controls Components GmbH & Co. KG, 67657 Kaiserslautern (DE)
(72) Erfinder: ROTH, Michael, 67681 Sembach (DE); JUNG, Markus, 66887 Bosenbach (DE)
(74) Vertreter: Wilhelm, Wolfgang
(86) Internationale Anmeldenummer: PCT/EP2012/002189
(87) Internationale Veröffentlichungsnummer: WO 2012/163493

(56) Entgegenhaltungen:
- DE-A1-102009 033 494
- JP-A- 2006 143 173

## Beschreibung

Die Erfindung betrifft einen Fahrzeugsitz, insbesondere einen Kraftfahrzeugsitz, gemäß dem Oberbegriff des Anspruchs 1.

### Stand der Technik

Aus der DE 10 2009 033 494 A1 ist ein gattungsgemäßer Fahrzeugsitz bekannt, welcher eine Sitzschale und zwei parallel zueinander in Längsrichtung verlaufende Schienenpaare aufweist. Die Sitzschale ist dabei um eine vertikale Schwenkachse drehbar. Diese Drehung wird dadurch erreicht, dass die beiden Oberschienen der zur Längseinstellung vorgesehenen Schienenpaare relativ zueinander verschiebbar sind.

Vorzugsweise ist ein solcher Fahrzeugsitz mit zwei Elektromotoren zum Antrieb der beiden Oberschienen ausgestattet. Alternativ ist ein solcher Fahrzeugsitz aber auch manuell betätigbar. In diesem Fall verfügt jede der Oberschienen über eine separat entriegelbare Verriegelungseinrichtung.

Durch Entriegeln von einer der beiden Verriegelungseinrichtungen und Verschieben von einer Oberschiene relativ zu der anderen Oberschiene ist die Sitzschale des Fahrzeugsitzes dann um die Schwenkachse drehbar, wodurch Einstieg und Ausstieg erleichtert sind. Durch Entriegeln von beiden Verriegelungseinrichtungen gleichzeitig ist der Fahrzeugsitz in Längsrichtung verschiebbar.

### Aufgabe

Der Erfindung liegt die Aufgabe zugrunde, einen Fahrzeugsitz der eingangs genannten Art zu verbessern.

### Lösung

Diese Aufgabe wird erfindungsgemäß durch einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Erfindungsgemäß wird an der schwellerseitig angeordneten Oberschiene eine Hauptmemoryvorrichtung vorgesehen. Derartige Memoryvorrichtungen werden beispielsweise auch bei dreitürigen Fahrzeugen zur Gewährleistung der Easy-Entry-Funktion eingesetzt. Besagte Hauptmemoryvorrichtung speichert eine zuvor eingestellte Längsposition der schwellerseitigen Oberschiene und verhindert eine Verschiebung dieser Oberschiene nach hinten, also entgegen der Fahrtrichtung, über die gespeicherte Längsposition hinaus. Ferner ist mindestens eine Federeinheit vorgesehen, welche die tunnelseitige Oberschiene relativ zu der schwellerseitigen Oberschiene in Längsrichtung beaufschlagt.

In einer Fahrposition des erfindungsgemäßen Fahrzeugsitzes ist durch gleichzeitiges Entriegeln beider Verriegelungseinrichtungen die tunnelseitige Oberschiene relativ zu der schwellerseitigen Oberschiene nach vorne, also in Fahrtrichtung verschiebbar, wobei die Hauptmemoryvorrichtung eine Verschiebung der schwellerseitigen Oberschiene nach hinten verhindert. Durch besagte Verschiebung erfährt die Sitzschale eine Drehung um eine vertikale Schwenkachse. Durch die Beaufschlagung durch die Federeinheit wird die schwellerseitige Oberschiene relativ zu der tunnelseitigen Oberschiene verschoben, die Drehbewegung der Sitzschale wird somit durch die Kraft der Federeinheit unterstützt.

Durch eine anschließende Verschiebung beider Oberschienen gleichzeitig in Fahrtrichtung entfernt sich die Sitzschale von störenden Karosserieteilen, beispielsweise einer B-Säule des Kraftfahrzeugs, und gelangt näher an die Türöffnung. In dieser als Ausstiegsposition bezeichneten Stellung sind Einstieg und Ausstieg noch weiter erleichtert. Wird die Sitzschale anschließend nach hinten zurück geschoben, so gewährleistet die Hauptmemoryvorrichtung, dass die schwellerseitige Oberschiene in der zuvor gespeicherten Längsposition stehen bleibt. Wird nun die Sitzschale wieder zurück gedreht so befindet sich der Fahrzeugsitz wieder in der ursprünglich eingestellten Fahrposition.

Gemäß einer bevorzugten Ausführungsform der Erfindung ist die Federeinheit direkt zwischen der ersten Oberschiene und der schwellerseitigen Oberschiene angeordnet.

Gemäß einer vorteilhaften Ausgestaltung der Erfindung ist an der tunnelseitigen Oberschiene eine Zusatzmemoryvorrichtung vorgesehen.

Diese Zusatzmemoryvorrichtung an der tunnelseitigen Schiene verhindert, insbesondere bei der letztgenannten Drehung der Sitzschale, eine Bewegung der tunnelseitigen Oberschiene nach hinten über die gespeicherte Längsposition hinaus und erleichtert somit das Auffinden der ursprünglichen Fahrposition, bei welcher die Oberschienen sich in Längsrichtung auf gleicher Höhe, also ohne Versatz zueinander, befinden.

Vorzugsweisesind die beiden Memoryvorrichtungen gleichzeitig aktiviert, insbesondere während einer Drehung der Sitzschale um die vertikal verlaufende Schwenkachse.

Vorzugsweise beaufschlagt dabei die Federeinheit, die vorzugsweise zwischen den beiden Oberschienen angeordnet ist, die tunnelseitige Oberschiene relativ zu der schwellerseitigen Oberschiene in Fahrtrichtung.

Vorteilhaft ist die Federeinheit, welche vorzugsweise als Gasdruckfeder ausgebildet ist, blockierbar. Bei blockierter Federeinheit ist eine ungewollte Drehung der Sitzschale bei einer reinen Längseinstellung des Fahrzeugsitzes verhindert.

Gemäß einer vorteilhaften Ausgestaltung der Erfindung liegt eine Konsole auf den Oberschienen auf, welche an der schwellerseitigen Oberschiene um eine vertikal verlaufende Drehachse drehbar gelagert ist. Dabei ist die Sitzschale vorzugsweise auf der Konsole montiert.

Vorzugsweise fluchtet die Drehachse, um welche die Konsole drehbar ist, mit der Schwenkachse, um welche die Sitzschale drehbar ist.

Gemäß einer alternativen Ausführungsform der Erfindung ist die Federeinheit zwischen der tunnelseitigen Oberschiene und der Konsole angeordnet. Die Federeinheit umfasst dazu beispielsweise eine Druckfeder oder eine Zugfeder, welche die Konsole relativ zu der tunnelseitigen Oberschiene beaufschlagt.

Gemäß einer weiteren alternativen Ausführungsform der Erfindung ist die Federeinheit zwischen der schwellerseitigen Oberschiene und der Konsole angeordnet. Die Federeinheit umfasst dazu beispielsweise eine Drehfeder, welche um die Drehachse der Konsole herum gewunden ist und die Konsole relativ zu der schwellerseitigen Oberschiene beaufschlagt.

Es ist auch denkbar, mehrere Federeinheiten an verschiedenen Orten vorzusehen.

Weitere vorteilhafte Ausgestaltungen der Erfindung sind den weiteren Unteransprüchen zu entnehmen.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:
- Fig. 1:: eine perspektivische Darstellung eines Unterbaus eines Fahrzeugsitzes in Fahrposition,
- Fig. 2:: eine perspektivische Darstellung eines Fahrzeugsitzes in Schwenkposition,
- Fig. 3:: eine schematische Darstellung eines Unterbaus ohne Konsole in Fahrposition gemäß einem ersten Ausführungsbeispiel,
- Fig. 4:: eine schematische Darstellung eines Unterbaus ohne Konsole in Schwenkposition gemäß dem ersten Ausführungsbeispiel,
- Fig. 5:: eine schematische Darstellung eines Unterbaus ohne Konsole in Ausstiegsposition gemäß dem ersten Ausführungsbeispiel und
- Fig. 6:: eine schematische Darstellung eines Unterbaus ohne Konsole in Fahrposition gemäß einem zweiten Ausführungsbeispiel.

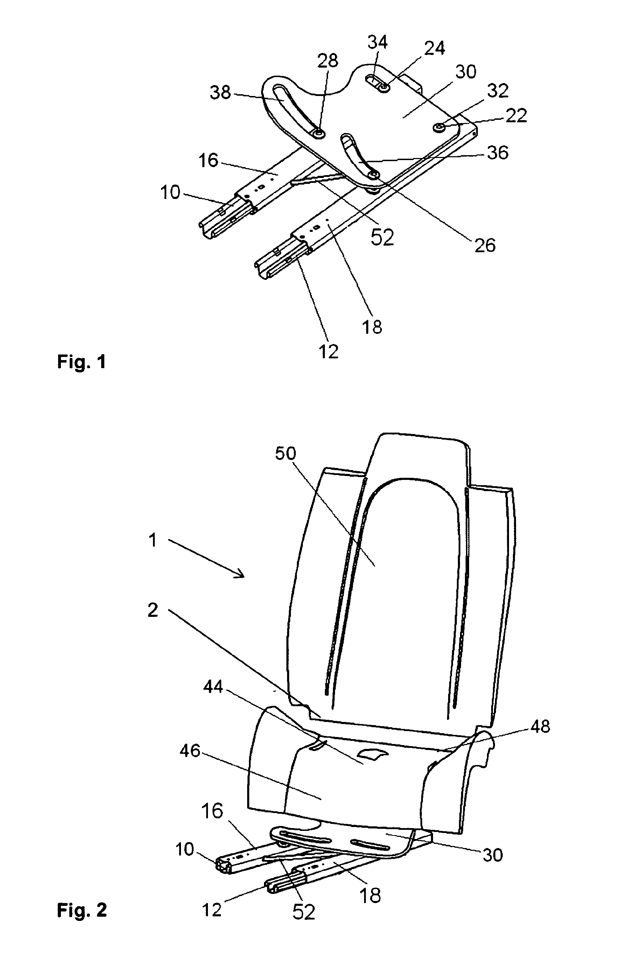

In Fig. 1 ist ein Unterbau eines erfindungsgemäßen Fahrzeugsitzes 1 in Fahrposition dargestellt.

Eine erste Unterschiene 10 und eine zweite Unterschiene 12 sind parallel zueinander an einem Fahrzeugboden befestigt. Eine erste Oberschiene 16 ist in der ersten Unterschiene 10 beweglich geführt. Ebenso ist eine zweite Oberschiene 18 in der zweiten Unterschiene 12 beweglich geführt. Die Bewegungsrichtung der Oberschienen 16, 18 bezüglich der Unterschienen 10, 12 wird als Längsrichtung bezeichnet.

In diesem Beispiel verläuft die Längsrichtung parallel zu der Fahrtrichtung F. Die Oberschienen 16, 18 sind somit in Fahrtrichtung F sowie entgegen der Fahrtrichtung F verschiebbar. Es ist auch denkbar, die Unterschienen 10, 12 schräg oder geneigt zur Fahrtrichtung F anzuordnen. In diesem Fall sind die Oberschienen 16, 18 schräg oder geneigt zur Fahrtrichtung F verschiebbar.

Eine Konsole 30 liegt auf den Oberschienen 16, 18 auf und ist an diesen befestigt. Auf der Konsole 30 ist eine hier nicht gezeigte Sitzschale montiert. Die Konsole 30 hat in diesem Beispiel die Form einer ebenen Platte, welche sich im Wesentlichen in Längsrichtung und in einer senkrecht dazu verlaufenden, als Querrichtung bezeichneten Richtung erstreckt.

Durch synchrones Verschieben der ersten Oberschiene 16 und der zweiten Oberschiene 18 relativ zu den Unterschienen 10, 12 erfährt die Konsole 30 eine Verschiebung in Längsrichtung.

Eine senkrecht zu der Längsrichtung und senkrecht zu der Querrichtung verlaufende Richtung wird im Folgenden als Vertikalrichtung bezeichnet.

Die Konsole 30 weist eine Bohrung 32 auf, durch welche ein an der zweiten Oberschiene 18 befestigter Drehbolzen 22 ragt. Die Konsole 30 ist somit um die Mittelachse des Drehbolzens 22 drehbar an der zweiten Oberschiene 18 gelagert.

Weiterhin weist die Konsole 30 eine erste Ausnehmung 34 auf, durch welche ein an der ersten Oberschiene 16 befestigter erster Bolzen 24 ragt. Die erste Ausnehmung 34 hat in diesem Beispiel die Form eines in Querrichtung verlaufenden geraden Langlochs mit einer dem Durchmesser des ersten Bolzens 24 entsprechenden Breite. Die erste Ausnehmung 34 kann sich auch schräg zur Querrichtung erstrecken. Auch eine andere Gestaltung, beispielsweise eine Krümmung, ist denkbar.

Die Konsole 30 weist außerdem eine zweite Ausnehmung 36 auf, durch welche ein an der zweiten Oberschiene 18 befestigter zweiter Bolzen 26 ragt. Die zweite Ausnehmung 36 hat die Gestalt eines Langlochs in Form eines Kreissegments mit einer dem Durchmesser des zweiten Bolzens 26 entsprechenden Breite. Der Radius dieses Kreissegments entspricht dem Abstand der Mittelachse des Drehbolzens 22 zur Mittelachse des zweiten Bolzens 26.

Weiterhin weist die Konsole 30 eine dritte Ausnehmung 38 auf, durch welche ein an der ersten Oberschiene 16 befestigter dritter Bolzen 28 ragt. Die dritte Ausnehmung 38 hat die Form eines gekrümmten Langlochs mit einer dem Durchmesser des dritten Bolzens 28 entsprechenden Breite.

Jede der Oberschienen 16, 18 verfügt weiterhin über je eine Verriegelungseinrichtung 66, 68. Mittels der ersten Verriegelungseinrichtung 66 ist die erste Oberschiene 16 mit der ersten Unterschiene 10 verriegelbar. Mittels der zweiten Verriegelungseinrichtung 68 ist die zweite Oberschiene 18 mit der zweiten Unterschiene 12 verriegelbar.

Beide Verriegelungseinrichtungen 66, 68 sind vorliegend gemeinsam und gleichzeitig auf bekannte Art mittels einer Entriegelungseinheit entriegelbar. Der Fahrzeugsitz 1 umfasst dazu beispielsweise einen Entriegelungsgriff 64, welcher über je einen Bowdenzug mit den Verriegelungseinrichtungen 66, 68 verbunden ist. Durch Ziehen an diesem Entriegelungsgriff 64 werden somit beide Verriegelungseinrichtungen 66, 68 entriegelt und die Oberschienen 16, 18 sind in der jeweiligen Unterschiene 10, 12 in Längsrichtung verschieblich.

Die zweite Oberschiene 18 verfügt über eine Hauptmemoryvorrichtung 58, auf welche später eingegangen wird. Ebenso verfügt die erste Oberschiene 16 über eine Zusatzmemoryvorrichtung 56, auf welche später eingegangen wird. Ferner ist ein Betätigungsgriff 54 zur gemeinsamen Ansteuerung der Memoryvorrichtungen 56, 58 vorgesehen.

Besagte Memoryvorrichtungen 56, 58 dienen dem Speichern einer zuvor eingestellten Längsposition der Oberschienen 16, 18 relativ zu den Unterschienen 10, 12. Eine derartige Memoryvorrichtung ist beispielsweise in der EP 1 474 308 B1 beschrieben.

Zwischen der ersten Oberschiene 16 und der zweiten Oberschiene 18 ist diagonal eine Federeinheit 52 angebracht. Die Federeinheit 52 ist dabei an der ersten Oberschiene 16 in Fahrrichtung F im vorderen Bereich und an der zweiten Oberschiene 18 in Fahrtrichtung F im hinteren Bereich jeweils drehbar gelagert. Vorliegend ist die Federeinheit 52 als blockierbare Gasdruckfeder ausgeführt, bei welcher eine Kolbenstange in einem Zylinder in axialer Richtung linear geführt ist. Aber auch andere Ausführungsformen sind denkbar.

In normaler Fahrposition ist die Federeinheit 52 blockiert, die Kolbenstange ist also nicht relativ zu dem Zylinder beweglich. Bei Betätigung des Entriegelungsgriffs 64 für eine Längseinstellung des Fahrzeugsitzes 1 bleibt die Federeinheit 52 blockiert. Bei Betätigung des Entriegelungsgriffs 64 werden die Memoryvorrichtung 56, 58 zurück gesetzt und die neu eingestellte Längsposition wird gespeichert.

Die Mittelachsen des Drehbolzens 22 und der Bolzen 24, 26, 28 verlaufen parallel zueinander in Vertikalrichtung. Die Ausnehmungen 34, 36, 38 sind so ausgestaltet, dass bei einer Verschiebung der ersten Oberschiene 16 relativ zu der zweiten Oberschiene 18 in Längsrichtung eine Drehung der Konsole 30 um die Mittelachse des Drehbolzens 22 ermöglicht ist.

Erfolgt aus der Fahrposition heraus eine solche Verschiebung der ersten Oberschiene 16 relativ zu der zweiten Oberschiene 18 in Fahrtrichtung F, so erfahren die Konsole und eine darauf angebrachte Sitzschale eine Drehung um den Drehbolzen 22 entgegen dem Uhrzeigersinn.

In Fig. 2 ist ein erfindungsgemäßer Fahrzeugsitz 1 in einer solchen Schwenkposition dargestellt. Bei dem hier gezeigten Ausführungsbeispiel handelt es sich um einen Fahrersitz eines Linkslenkerfahrzeugs.

Auf der Konsole 30 ist ein Sitzkissen 44 befestigt, welches ein in Längsrichtung vorderes Ende 46 und ein in Längsrichtung hinteres Ende 48 aufweist. Im Bereich des hinteren Endes 48 des Sitzkissens 44 ist eine Rückenlehne 50 angeordnet. Das Sitzkissen 44 und die Rückenlehne 50 bilden eine Sitzschale 2. In der Fahrposition weist das vordere Ende 46 des Sitzkissens 44 annähernd in Fahrtrichtung und das hintere Ende 48 des Sitzkissens 44 weist annähernd entgegen der Fahrtrichtung.

Eine Bewegung einer Oberschiene 16, 18 in Richtung des vorderen Endes 46 des Sitzkissens 44 entspricht somit einer Bewegung annähernd in Fahrtrichtung F und wird im Folgenden als Vorwärtsbewegung bezeichnet. Eine Bewegung einer Oberschiene 16, 18 in Richtung des hinteren Endes 48 des Sitzkissens 44 entspricht einer Bewegung annähernd entgegen der Fahrtrichtung und wird im Folgenden als Rückwärtsbewegung bezeichnet.

Bei dem gewählten Ausführungsbeispiel befinden sich die erste Oberschiene 16 und die erste Unterschiene 10 in Fahrtrichtung gesehen rechts von der zweiten Oberschiene 18 und der zweiten Unterschiene 12. Die erste Oberschiene 16 und die erste Unterschiene 10 sind somit tunnelseitig angeordnet, also einem in der Fahrzeugmitte verlaufenden Tunnel zugewandt. Die zweite Oberschiene 18 und die zweite Unterschiene 12 sind schwellerseitig angeordnet, also einem an den Fahrzeugaußenseite verlaufenden Schweller und einer Fahrzeugtür zugewandt.

Eine Drehung der Konsole 30 um den Drehbolzen 22 entgegen dem Uhrzeigersinn findet statt, wenn sich die erste Oberschiene 16 relativ zu der zweiten Oberschiene 18 in Vorwärtsrichtung bewegt. Das Sitzkissen 44 und die Rückenlehne 50 erfahren dabei die gleiche Drehung, wodurch das vordere Ende 46 des Sitzkissens 44 sich der Fahrertür nähert. Eine Drehung der Konsole 30 im Uhrzeigersinn findet statt, wenn sich die erste Oberschiene 16 relativ zu der zweiten Oberschiene 18 in Rückwärtsrichtung bewegt.

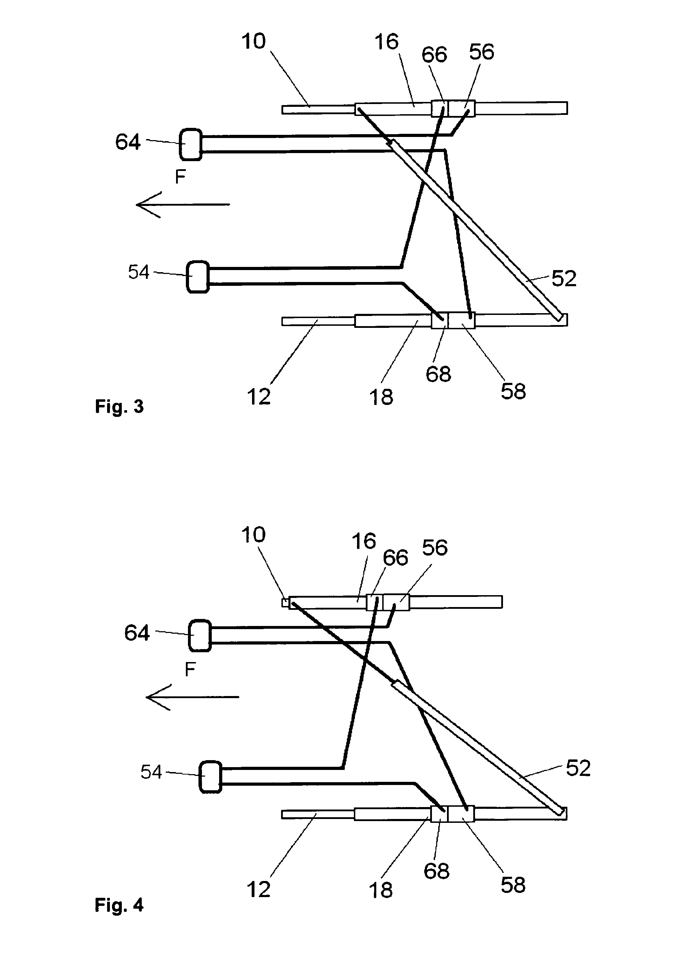

In den Fig. 3 bis 5 ist der Ablauf einer kombinierten Dreh-Längsbewegung anhand der jeweiligen Stellungen des Unterbaus des Fahrzeugsitzes 1 an einem ersten Ausführungsbeispiel dargestellt. Dabei sind die Sitzschale 2 sowie die Konsole 30 nicht dargestellt.

In Fahrposition befinden sich die erste Oberschiene 16 und die zweite Oberschiene 18 in Längsrichtung auf gleicher Höhe, also ohne Versatz zueinander, und sind mit den Unterschienen 10, 12 mittels der Verriegelungseinrichtungen 66, 68 verriegelt.

Durch Betätigung des Betätigungsgriffs 54 werden die Verriegelungseinrichtungen 66, 68 entriegelt, die Oberschienen 16, 18 sind damit relativ zu den Unterschienen 10, 12 in Längsrichtung beweglich. Gleichzeitig wird die Blockierung der Federeinheit 52 gelöst.

Die Memoryvorrichtungen 56, 58 sind dabei aktiviert. Das bedeutet, in beiden Memoryvorrichtungen 56, 58 ist die aktuelle Längsposition gespeichert, beide Memoryvorrichtungen 56, 58 verhindern eine Bewegung entgegen der Fahrtrichtung F und beide Memoryvorrichtungen 56, 58 sensieren eine folgende Bewegung in Fahrtrichtung F.

Die als Gasdruckfeder ausgeführte Federeinheit 52 dehnt sich in axialer Richtung aus, in dem die Kolbenstange aus dem Zylinder herausgedrückt wird. Dadurch wird die erste Oberschiene 16 relativ zu der zweiten Oberschiene 18 und relativ zu der ersten Unterschiene 10 in Fahrtrichtung F bewegt. Die Konsole und die Sitzschale erfahren dadurch eine Drehung um eine vertikale Schwenkachse entgegen dem Uhrzeigersinn. Die Hauptmemoryvorrichtung 58 verhindert dabei eine Bewegung der zweiten Oberschiene 18 entgegen der Fahrtrichtung F. Die Zusatzmemoryvorrichtung 56 sensiert die besagte Bewegung der ersten Oberschiene 16 relativ zu der ersten Unterschiene 10.

Die besagte Drehung endet, wenn die Bolzen 24, 26, 28 an den Endbereichen der zugeordneten Ausnehmungen 34, 36, 38 der Konsole 30 zur Anlage kommen. Dann befindet sich der Fahrzeugsitz 1 in Schwenkposition. Eine weitere Drehung entgegen dem Uhrzeigersinn ist nicht möglich.

In Schwenkposition und in Fahrposition befindet sich die zweite Oberschiene 18 jeweils in der gleichen Längsposition in Bezug auf die zweite Unterschiene 12.

Der Fahrzeugsitz 1 kann nun in Fahrtrichtung F, also nach vorne, verschoben werden bis eine gewünschte Ausstiegsposition erreicht ist. Dabei bewegen sich die erste Oberschiene 16 und die zweite Oberschiene 18 synchron relativ zu den Unterschienen 10, 12 in Fahrtrichtung. Die Zusatzmemoryvorrichtung 56 und die Hauptmemoryvorrichtung 58 sensieren diese Bewegungen der Oberschienen 16, 18 relativ zu den Unterschienen 10, 12. Die Bewegung des Fahrzeugsitzes 1 nach vorne endet spätestens, wenn die erste Oberschiene 16 einen vorderen Endanschlag an der ersten Unterschiene 10 erreicht.

Wird bei Erreichen der gewünschten Ausstiegsposition der Betätigungsgriff 54 losgelassen, so werden die Verriegelungseinrichtungen 66, 68 verriegelt, die Oberschienen 16, 18 sind damit relativ zu den Unterschienen 10, 12 verriegelt. Auch die Federeinheit 52 wird wieder blockiert. Die Memoryvorrichtungen 56, 58 bleiben aktiviert.

In Schwenkposition und in Ausstiegsposition hat die zweite Oberschiene 18 in Längsrichtung jeweils den gleichen Versatz zu der ersten Oberschiene 16.

Durch erneute Betätigung des Betätigungsgriffs 54 werden die Verriegelungseinrichtungen 66, 68 wieder entriegelt und die Oberschienen 16, 18 sind damit wieder relativ zu den Unterschienen 10, 12 in Längsrichtung beweglich. Gleichzeitig wird auch die Blockierung der Federeinheit 52 gelöst. Die Memoryvorrichtungen 56, 58 bleiben aktiviert.

Der Fahrzeugsitz 1 kann nun entgegen der Fahrtrichtung F, also nach hinten, verschoben werden bis die Schwenkposition wieder erreicht ist. Dabei bewegen sich die erste Oberschiene 16 und die zweite Oberschiene 18 synchron relativ zu den Unterschienen 10, 12 entgegen der Fahrtrichtung F. Die Zusatzmemoryvorrichtung 56 und die Hauptmemoryvorrichtung 58 sensieren diese Bewegungen der Oberschienen 16, 18 relativ zu den Unterschienen 10, 12.

Die Schwenkposition ist erreicht, wenn die Hauptmemoryvorrichtung 58 die zuvor gespeicherte Längsposition sensiert. Die Hauptmemoryvorrichtung 58 verhindert dann eine weitere Bewegung der zweiten Oberschiene 18 nach hinten.

Wird weiterhin versucht, den Fahrzeugsitz 1 nach hinten zu schieben, so bewegt sich die erste Oberschiene 16 weiter nach hinten, während die zweite Oberschiene 18 stehen bleibt. Dabei ist auch die von der Federeinheit 52 dieser Bewegung entgegengesetzte Kraft zu überwinden. Die Sitzschale des Fahrzeugsitzes 1 erfährt dabei eine Drehung um eine vertikale Schwenkachse im Uhrzeigersinn.

Diese Drehung endet, wenn die Zusatzmemoryvorrichtung 56 die zuvor gespeicherte Längsposition sensiert. Die Zusatzmemoryvorrichtung 56 verhindert dann eine weitere Bewegung der ersten Oberschiene 16 nach hinten. Die ursprüngliche Fahrposition ist nun wieder erreicht.

Wird nun der Betätigungsgriff 54 losgelassen, so werden die Verriegelungseinrichtungen 66, 68 verriegelt, die Oberschienen 16, 18 sind damit relativ zu den Unterschienen 10, 12 verriegelt. Auch die Federeinheit 52 wird wieder blockiert. Die Memoryvorrichtungen 56, 58 bleiben aktiviert.

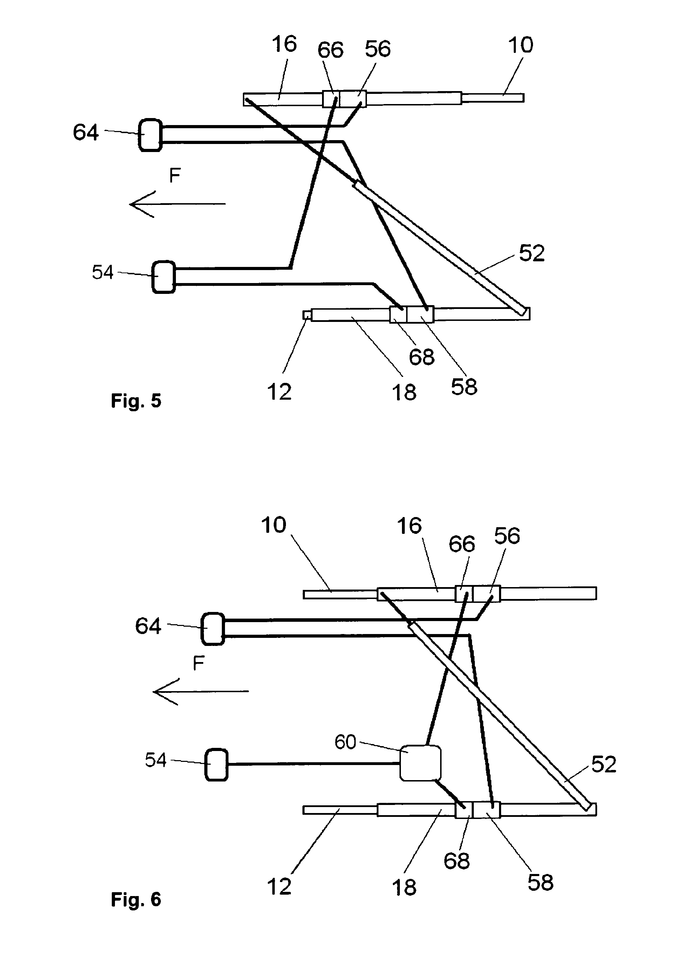

Gemäß einem zweiten Ausführungsbeispiel, welches in Fig. 6 dargestellt ist, ist eine Halteeinheit 60 vorgesehen, welche mit dem Betätigungsgriff 54, der Federeinheit 52 sowie mit den Verriegelungseinrichtungen 66, 68 in Wirkverbindung steht.

Durch Betätigung des Betätigungsgriffs 54 wird die Halteeinheit 60 angesteuert, welche daraufhin die Verriegelungseinrichtungen 66, 68 entriegelt und die Blockierung der Federeinheit 52 löst. Nach einer verhältnismäßig kleinen Drehung der Sitzschale des Fahrzeugsitzes 1 und einer entsprechenden Ausdehnung der Federeinheit 52 blockiert die Federeinheit 52 die Halteeinheit 60. Somit bleiben die Verriegelungseinrichtungen 66, 68 entriegelt und die Blockierung der Federeinheit 52 gelöst. Auch wenn nun der Betätigungsgriff 54 losgelassen wird, kann der Fahrzeugsitz 1 in die Schwenkposition sowie in die Ausstiegsposition und wieder zurück bewegt werden.

Bei Erreichen der Ausstiegposition wird die Federeinheit 52 wieder komprimiert und gibt damit die Halteeinheit 60 frei. Dadurch wird die Federeinheit 52 wieder blockiert und die Verriegelungseinrichtungen 66, 68 werden verriegelt.

Gemäß einer kostengünstigen Variante kann die Zusatzmemoryvorrichtung 56 an der tunnelseitigen ersten Oberschiene 16 auch entfallen. In diesem Fall endet die Drehung der Sitzschale von der Schwenkposition in die Fahrposition, wenn die Bolzen 24, 26, 28 an den Endbereichen der zugeordneten Ausnehmungen 34, 36, 38 der Konsole 30 zur Anlage kommen. Eine weitere Drehung im Uhrzeigersinn ist nicht möglich.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 2: Sitzschale
- 10: erste Unterschiene
- 12: zweite Unterschiene
- 16: erste Oberschiene
- 18: zweite Oberschiene
- 22: Drehbolzen
- 24: erster Bolzen
- 26: zweiter Bolzen
- 28: dritter Bolzen
- 30: Konsole
- 32: Bohrung
- 34: erste Ausnehmung
- 36: zweite Ausnehmung
- 38: dritte Ausnehmung
- 44: Sitzkissen
- 46: vorderes Ende des Sitzkissens
- 48: hinteres Ende des Sitzkissens
- 50: Rückenlehne
- 52: Federeinheit
- 54: Betätigungsgriff
- 56: Zusatzmemoryvorrichtung
- 58: Hauptmemoryvorrichtung
- 60: Halteeinheit
- 64: Entriegelungsgriff
- 66: erste Verriegelungseinrichtung
- 68: zweite Verriegelungseinrichtung
- F: Fahrtrichtung

## Patentansprüche

1. Fahrzeugsitz (1) mit einer Sitzschale (2),
umfassend eine tunnelseitig angeordnete erste Oberschiene (16),
welche in einer ersten Unterschiene (10) beweglich geführt ist,
und eine schwellerseitig angeordnete zweite Oberschiene (18),
welche in einer zweiten Unterschiene (12) beweglich geführt ist,
wobei die erste Oberschiene (16) relativ zu der zweiten Oberschiene (18) verschiebbar ist,
und wobei durch eine Verschiebung der ersten Oberschiene (16) relativ zu der zweiten Oberschiene (18) die Sitzschale (2) eine Drehung um eine vertikal verlaufende Schwenkachse erfährt,
**dadurch gekennzeichnet, dass**
an der zweiten Oberschiene (18) eine Hauptmemoryvorrichtung (58) vorgesehen ist, und dass
mindestens eine Federeinheit (52) vorgesehen ist, welche die erste Oberschiene (16) relativ zu der zweiten Oberschiene (18) in Längsrichtung beaufschlagt.

2. Fahrzeugsitz (1) nach Anspruch 1, **dadurch gekennzeichnet, dass** die Federeinheit (52) zwischen der ersten Oberschiene (16) und der zweiten Oberschiene (18) angeordnet ist.

3. Fahrzeugsitz (1) nach einem der vorstehenden Ansprüche, **dadurch gekennzeichnet, dass** an der ersten Oberschiene (16) eine Zusatzmemoryvorrichtung (56) vorgesehen ist.

4. Fahrzeugsitz (1) nach Anspruch 3, **dadurch gekennzeichnet, dass** die beiden Memoryvorrichtungen (56, 58) gleichzeitig aktiviert sind.

5. Fahrzeugsitz (1) nach einem der Ansprüche 3 oder 4, **dadurch gekennzeichnet, dass** die beiden Memoryvorrichtungen (56, 58) während einer Drehung der Sitzschale (2) um die vertikal verlaufende Schwenkachse aktiviert sind.

6. Fahrzeugsitz (1) nach einem der vorstehenden Ansprüche, **dadurch gekennzeichnet, dass** die Federeinheit (52) die erste Oberschiene (16) relativ zu der zweiten Oberschiene (18) in Fahrtrichtung beaufschlagt.

7. Fahrzeugsitz (1) nach einem der vorstehenden Ansprüche, **dadurch gekennzeichnet, dass** die Federeinheit (52) eine Gasdruckfeder ist.

8. Fahrzeugsitz (1) nach einem der vorstehenden Ansprüche, **dadurch gekennzeichnet, dass** die Federeinheit (52) blockierbar ist.

9. Fahrzeugsitz (1) nach einem der vorstehenden Ansprüche, **dadurch gekennzeichnet, dass** eine Konsole (30) auf den Oberschienen (16, 18) aufliegt, welche an der zweiten Oberschiene (18) um eine vertikal verlaufende Drehachse drehbar gelagert ist.

10. Fahrzeugsitz (1) nach Anspruch 9, **dadurch gekennzeichnet, dass** auf der Konsole (30) die Sitzschale (2) montiert ist.

11. Fahrzeugsitz (1) nach einem der Ansprüche 9 oder 10, **dadurch gekennzeichnet, dass** die Drehachse mit der Schwenkachse fluchtet.

12. Fahrzeugsitz (1) nach einem der Ansprüche 9 bis 11, **dadurch gekennzeichnet, dass** die Federeinheit (52) zwischen der ersten Oberschiene (16) und der Konsole (30) angeordnet ist.

13. Fahrzeugsitz (1) nach einem der Ansprüche 9 bis 12, **dadurch gekennzeichnet, dass** die Federeinheit (52) zwischen der zweiten Oberschiene (18) und der Konsole (30) angeordnet ist.

## Claims

1. Vehicle seat (1) having a seat shell (2), comprising a first top rail (16), which is arranged on the tunnel side and is guided movably in a first bottom rail (10), and a second top rail (18) which is arranged on the sill side and is guided movably in a second bottom rail (12), it being possible for the first top rail (16) to be displaced relative to the second top rail (18), and the seat shell (2) experiencing a rotation about a vertically running pivot axis as a result of a displacement of the first top rail (16) relative to the second top rail (18), **characterized in that** a main memory apparatus (58) is provided on the second top rail (18), and **in that** at least one spring unit (52) is provided which loads the first top rail (16) in the longitudinal direction relative to the second top rail (18).

2. Vehicle seat (1) according to Claim 1, **characterized in that** the spring unit (52) is arranged between the first top rail (16) and the second top rail (18).

3. Vehicle seat (1) according to one of the preceding claims, **characterized in that** an additional memory apparatus (56) is provided on the first top rail (16).

4. Vehicle seat (1) according to Claim 3, **characterized in that** the two memory apparatuses (56, 58) are activated at the same time.

5. Vehicle seat (1) according to either of Claims 3 and 4, **characterized in that** the two memory apparatuses (56, 58) are activated during a rotation of the seat shell (2) around the vertically running pivot axis.

6. Vehicle seat (1) according to one of the preceding claims, **characterized in that** the spring unit (52) loads the first top rail (16) in the driving direction relative to the second top rail (18).

7. Vehicle seat (1) according to one of the preceding claims, **characterized in that** the spring unit (52) is a gas pressure spring.

8. Vehicle seat (1) according to one of the preceding claims, **characterized in that** the spring unit (52) can be blocked.

9. Vehicle seat (1) according to one of the preceding claims, **characterized in that** a bracket (30) rests on the top rails (16, 18), which bracket (30) is mounted on the second top rail (18) such that it can be rotated about a vertically running rotational axis.

10. Vehicle seat (1) according to Claim 9, **characterized in that** the seat shell (2) is mounted on the bracket (30).

11. Vehicle seat (1) according to either of Claims 9 and 10, **characterized in that** the rotational axis is aligned with the pivot axis.

12. Vehicle seat (1) according to one of Claims 9 to 11, **characterized in that** the spring unit (52) is arranged between the first top rail (16) and the bracket (30).

13. Vehicle seat (1) according to one of Claims 9 to 12, **characterized in that** the spring unit (52) is arranged between the second top rail (18) and the bracket (30).

## Revendications

1. Siège de véhicule (1) avec une coque de siège (2), comprenant un premier rail supérieur (16) disposé côté tunnel et guidé de façon mobile dans un premier rail inférieur (10) et un deuxième rail supérieur (18) disposé côté bas de caisse et guidé de façon mobile dans un deuxième rail inférieur (12), le premier rail supérieur (16) pouvant être déplacé par rapport au deuxième rail supérieur (18) et la coque de siège (2) pouvant pivoter autour d'un axe de pivotement s'étendant verticalement par déplacement du premier rail supérieur (16) par rapport au deuxième rail supérieur (18) ;
**caractérisé en ce que** :
un dispositif de mémoire principale (58) est prévu au niveau du deuxième rail supérieur (18) ; et
au moins une unité de ressort (52) est prévue pouvant solliciter le premier rail supérieur (16) par rapport au deuxième rail supérieur (18) dans la direction longitudinale.

2. Siège de véhicule (1) selon la revendication 1, **caractérisé en ce que** l'unité de ressort (52) est disposée entre le premier rail supérieur (16) et le deuxième rail supérieur (18).

3. Siège de véhicule (1) selon l'une quelconque des revendications précédentes, **caractérisé en ce qu'**un dispositif de mémoire supplémentaire (56) est prévu au niveau du premier rail supérieur (16).

4. Siège de véhicule (1) selon la revendication 3, **caractérisé en ce que** les deux dispositifs de mémoire (56, 58) sont activés simultanément.

5. Siège de véhicule (1) selon l'une quelconque des revendications 3 ou 4, **caractérisé en ce que** les deux dispositifs de mémoire (56, 58) sont activés pendant une rotation de la coque de siège (2) autour de l'axe de pivotement s'étendant verticalement.

6. Siège de véhicule (1) selon l'une quelconque des revendications précédentes, **caractérisé en ce que** l'unité de ressort (52) sollicite le premier rail supérieur (16) par rapport au deuxième rail supérieur (18) dans la direction de conduite.

7. Siège de véhicule (1) selon l'une quelconque des revendications précédentes, **caractérisé en ce que** l'unité de ressort (52) est un ressort de pression de gaz.

8. Siège de véhicule (1) selon l'une quelconque des revendications précédentes, **caractérisé en ce que** l'unité de ressort (52) peut être bloquée.

9. Siège de véhicule (1) selon l'une quelconque des revendications précédentes, **caractérisé en ce qu'**une console (30) repose sur les rails supérieurs (16, 18) et est disposée de façon à pouvoir pivoter au niveau du deuxième rail supérieur (18), autour d'un axe de rotation s'étendant verticalement.

10. Siège de véhicule (1) selon la revendication 9, **caractérisé en ce que** la coque de siège (2) est montée sur la console (30).

11. Siège de véhicule (1) selon l'une quelconque des revendications 9 ou 10, **caractérisé en ce que** l'axe de rotation est aligné avec l'axe de pivotement.

12. Siège de véhicule (1) selon l'une quelconque des revendications 9 à 11, **caractérisé en ce que** l'unité de ressort (52) est disposée entre le premier rail supérieur (16) et la console (30).

13. Siège de véhicule (1) selon l'une quelconque des revendications 9 à 12, **caractérisé en ce que** l'unité de ressort (52) est disposée entre le deuxième rail supérieur (18) et la console (30).
